# EUROPÄISCHE PATENTSCHRIFT

(11) **EP 1 994 298 B1**
(45) Veröffentlichungstag und Bekanntmachung des Hinweises auf die Patenterteilung: **12.05.2010**
(21) Anmeldenummer: 07702445.3
(22) Anmeldetag: 15.02.2007
(51) Int. Cl.: F16D 48/02

(54) **KUPPLUNGSSTEUERUNGSEINRICHTUNG**
CLUTCH CONTROL DEVICE
DISPOSITIF DE COMMANDE D'EMBRAYAGE

(30) Priorität: 08.03.2006 DE 102006010629
(43) Veröffentlichungstag der Anmeldung: 26.11.2008
(73) Patentinhaber: LuK Lamellen und Kupplungsbau Beteiligungs KG, 77815 Bühl (DE)
(72) Erfinder: HOMM, Manfred, 77815 Bühl-Neusatz (DE); MÜLLER, Eric, 67657 Kaiserslautern (DE); STAUDINGER, Martin, 76275 Ettlingen (DE); DREHER, Felix, 79189 Bad Krozingen (DE)
(86) Internationale Anmeldenummer: PCT/DE2007/000292
(87) Internationale Veröffentlichungsnummer: WO 2007/101417

(56) Entgegenhaltungen:
- DE-A1- 10 105 259
- DE-A1- 19 815 666
- US-A1- 2003 047 412
- US-A1- 2004 204 280

## Beschreibung

Die Erfindung betrifft eine Kupplungssteuerungseinrichtung zum Steuern der Betätigung einer hydraulisch angesteuerten Kupplung mit einer Ventileinrichtung. Die Erfindung betrifft auch eine Kupplung, insbesondere eine Nasskupplung, mit einer Kupplungssteuerungseinrichtung. Die Erfindung betrifft des Weiteren einen Antriebsstrang mit einem Motor und einem Getriebe, insbesondere einem automatischen Schaltgetriebe, Doppelkupplungsgetriebe oder CVT-Getriebe.

Zur Betätigung einer Kupplung mittels eines Hydrauliksystems können zum Beispiel weg- oder druckgeregelte Ventile verwendet werden.

US 2004/204280 A1 zeigt eine Kupplungssteuerungseinrichtung gemäß dem Oberbegriff von Anspruch 1.

Aufgabe der Erfindung ist es, eine Kupplungssteuerungseinrichtung gemäß dem Oberbegriff des Anspruchs 1 zu schaffen, die ein schnelles und präzises Betätigen der Kupplung ermöglicht.

Diese Aufgabe ist durch eine Kupplungssteuerungseinrichtung zum Steuern der Betätigung einer hydraulisch angesteuerten Kupplung mit einer Ventileinrichtung nach Anspruch 1 oder Anspruch 3.

Die Kupplungssteuerungseinrichtung ist **dadurch gekennzeichnet, dass** das Volumenstromregelventil einen Ventilkörper umfasst, der zwischen einer Füllstellung, in der ein Füllvolumenstrom von einer Hydraulikmediumquelle zu dem Kupplungsstellglied freigegeben ist, und einer Entleerungsstellung bewegbar ist, in der ein Entleerungsvolumenstrom von dem Kupplungsstellglied zu einer Hydraulikmediumsenke freigegeben ist. Bei dem Ventilkörper handelt es sich vorzugsweise um einen Ventilkolben, der hin und her bewegbar in einem Ventilgehäuse geführt ist, das Steuerkanten aufweist, die in Abhängigkeit von der Ventilkolbenstellung unterschiedlich große Strömungsquerschnitte in Füll- oder Entleerungsrichtung freigeben.

Ein bevorzugtes Ausführungsbeispiel der Kupplungssteuerungseinrichtung ist **dadurch gekennzeichnet, dass** das Volumenstromregelventil zwischen der Füllstellung und der Entleerungsstellung eine Schließstellung für den Ventilkörper aufweist, in der beide Volumenströme unterbrochen sind. Dadurch wird beim Hin- und Herschalten zwischen der Füllstellung und der Entleerungsstellung ein Kurzschluss zwischen der Hydraulikmediumquelle und der Hydraulikmediumsenke verhindert.

Die Kupplungssteuerungseinrichtung ist **dadurch gekennzeichnet, dass** der Ventilkörper durch eine Federeinrichtung, die an einem Ende des Ventilkörpers angreift, in seine Entleerungsstellung vorgespannt ist, und durch einen Proportionalmagneten, der an der anderen Seite des Ventilkörpers angreift, in seine Füllstellung bewegbar ist. Bei der Federeinrichtung handelt es sich vorzugsweise um eine Druckfeder. Der Proportionalmagnet ist vorzugsweise so ausgelegt, dass er eine Druckkraft auf den Ventilkolben aufbringt, wenn er bestromt wird. Im Rahmen der vorliegenden Erfindung können jedoch auch andere Federeinrichtungen oder Proportionalmagnete verwendet werden.

Die Kupplungssteuerungseinrichtung ist **dadurch gekennzeichnet, dass** zwischen das Volumenstromregelventil und das hydraulische Kupplungsstellglied eine Blende geschaltet ist, wobei der Druck, in Füllrichtung des Kupplungsstellglieds betrachtet, stromaufwärts der Blende auf eine Seite, insbesondere auf die Seite des Ventilkörpers zurückgeführt ist, an der die Federeinrichtung angreift, und dass der Druck, in Füllrichtung des Kupplungsstellglieds betrachtet, stromabwärts der Blende auf die andere Seite, insbesondere auf die Seite des Ventilkörpers zurückgeführt ist, an der der Proportionalmagnet angreift. Durch die Druckrückführung wird beim Füllen des Kupplungsstellglieds eine Zusatzkraft auf den Ventilkörper bewirkt, deren Größe von dem Volumenstrom abhängt. Bei zunehmendem Volumenstrom wird der Ventilkörper durch die zunehmende Druckdifferenz an der Blende, welche die Wirkung der Federkraft unterstützt, in seine Entleerungsstellung zurückgestellt. Beim Entleeren des Kupplungsstellglieds kehren sich der Volumenstrom und auch die Druckdifferenz um, so dass die sich an der Blende einstellende Druckdifferenz in die entgegen gesetzte Richtung wie beim Füllen des Kupplungsstellglieds wirkt.

Ein weiteres bevorzugtes Ausführungsbeispiel der Kupplungssteuerungseinrichtung ist **dadurch gekennzeichnet, dass** zwischen die Hydraulikmediumquelle und das Volumenstromregelventil eine Füllblende geschaltet ist, wobei der Druck, in Füllrichtung des Kupplungsstellglieds betrachtet, stromaufwärts der Füllblende auf eine Seite, insbesondere auf die Seite des Ventilkörpers zurückgeführt ist, an der die Federeinrichtung angreift, und dass der Druck, in Füllrichtung des Kupplungsstellglieds betrachtet, stromabwärts der Füllblende auf die andere Seite, insbesondere auf die Seite des Ventilkörpers zurückgeführt ist, an der der Proportionalmagnet angreift. Bei dem in dem vorangegangenen Abschnitt beschriebenen Ausführungsbeispiel bewirkt die Druckdifferenz an der Blende auch einen geringeren Druck der Kupplung. Bei hohen Kupplungsdrücken kann die Verstellung also nur langsamer erfolgen. Verwendet man nun eine größere Blende, um diesen Effekt zu verringern, so stellt sich bei geringen Volumenströmen eine unter Umständen verschwindend geringe Druckdifferenz ein. Auch für die Entleerung der Kupplung beziehungsweise des Kupplungsstellglieds muss die Blende entsprechend ausgelegt werden. Dabei kann eher die Regelbarkeit verringert werden, als dass auf hohe Volumenströme verzichtet wird, da die Kupplung auf alle Fälle im Notfall sehr schnell geöffnet werden muss. Außerdem wirkt der Restdruck in der Kupplung bei dieser Funktionsrichtung als Druckreservoir. Wenn die Kupplung beziehungsweise das Kupplungsstellglied fast leer ist, dann kann keine große Druckdifferenz mehr aufgebaut werden. Die Blende muss also so groß sein, dass die Kupplung mit hoher Geschwindigkeit komplett geöffnet werden kann. Um diesen unterschiedlichen Anforderungen an die Blende gerecht zu werden, kann die Blende in Form der beschriebenen Füll- oder Zulaufblende vor das Volumenstromregelventil, also in den Zulaufkanal, gesetzt werden.

Ein weiteres bevorzugtes Ausführungsbeispiel der Kupplungssteuerungseinrichtung ist **dadurch gekennzeichnet, dass** zwischen das Volumenstromregelventil und die Hydraulikmediumsenke eine Entleerungsblende geschaltet ist, wobei der Druck, in Entleerungsrichtung des Kupplungsstellglieds betrachtet, stromaufwärts der Entleerungsblende auf eine Seite, insbesondere auf die Seite des Ventilkörpers zurückgeführt ist, an der der Proportionalmagnet angreift. Da nun für beide Durchströmungsrichtungen eine eigene Blende vorhanden ist, können diese ideal an die jeweiligen Bedürfnisse angepasst werden. Da für die Regelung mit dieser Ventilanordnung nur die Druckdifferenz, nicht aber der absolute Druck im System ausschlaggebend sind, ist eine Unabhängigkeit vom Systemdruck gegeben.

Ein weiteres bevorzugtes Ausführungsbeispiel der Kupplungssteuerungseinrichtung ist **dadurch gekennzeichnet, dass** das Volumenstromregelventil als federvorgespanntes 3/3-Wege-Proportionalmagnetventil ausgeführt ist. Diese Ausführung hat sich gegenüber herkömmlichen Wegeventilen als besonders vorteilhaft erwiesen.

Die Erfindung betrifft auch eine Kupplung, insbesondere eine Nasskupplung, mit einer vorab beschriebenen Kupplungssteuerungseinrichtung.

Bei einem Antriebsstrang, insbesondere eines Kraftfahrzeugs, mit einem Motor und einem Getriebe, insbesondere einem automatischen Schaltgetriebe, Doppelkupplungsgetriebe oder CVT-Getriebe, ist die vorab angegebene Aufgabe dadurch gelöst, dass eine vorab beschriebene Kupplung insbesondere als Anfahrkupplung zwischen den Motor und das Getriebe geschaltet ist.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Es zeigen:
Figur 1 einen Hydraulikschaltplan einer Kupplungssteuerungseinrichtung gemäß einem ersten Ausführungsbeispiel mit einer Blende und
Figur 2 einen Hydraulikschaltplan einer Kupplungssteuerungseinrichtung gemäß einem zweiten Ausführungsbeispiel mit einer Füll- und einer Entleerungsblende.

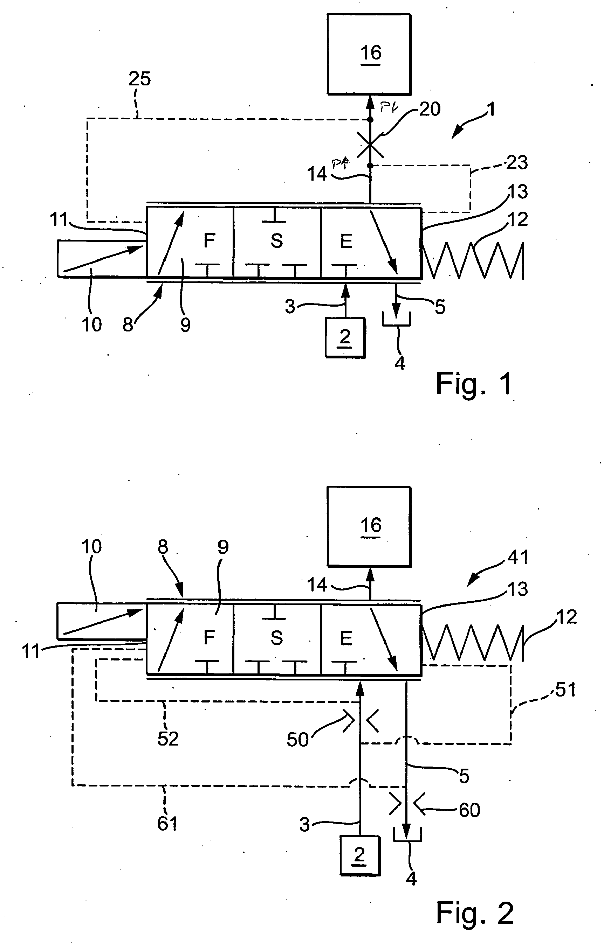

In Figur 1 ist ein Hydraulikschaltplan einer Kupplungssteuerungseinrichtung 1 dargestellt. Eine Hydraulikmediumquelle 2 ist nur durch ein Rechteck angedeutet. Bei der Hydraulikmediumquelle 2 handelt es sich zum Beispiel um einen Hydraulikölspeicher, eine Hydraulikölpumpe und/oder einen Hydrauliköldruckspeicher. Die Hydraulikmediumquelle fördert Hydraulikmedium, insbesondere Hydrauliköl in eine Hydraulikleitung, die durch einen Pfeil 3 angedeutet ist. Eine Hydraulikmediumsenke ist mit 4 bezeichnet. Bei der Hydraulikmediumsenke 4 handelt es sich zum Beispiel um einen Hydrauliköltank. In die Hydraulikmediumsenke 4 mündet eine weitere Hydraulikleitung, die durch einen Pfeil 5 angedeutet ist.

Die Hydraulikleitungen 3 und 5 sind an 3/3-Wege-Proportionalmagnetventil 8 angeschlossen, das auch als Volumenstromregelventil bezeichnet wird. Das Volumenstromregelventil 8 umfasst ein Ventilgehäuse, in dem ein Ventilkörper 9 hin und her bewegbar geführt ist. Der Ventilkörper 9, der auch als Ventilkolben bezeichnet wird, ist zwischen drei verschiedenen Stellungen F, S, E bewegbar. Ein Proportionalmagnet 10 greift an einem Ende 11 des Ventilkörpers 9 an. Eine Druckfeder 12 greift an dem anderen Ende 13 des Ventilkörpers 9 an. Durch die Druckfeder 12 ist der Ventilkörper 9 in die in Figur 1 dargestellte Stellung E vorgespannt. Wenn der Proportionalmagnet 10 bestromt wird, dann verschiebt sich der Ventilkörper 9 entgegen der Vorspannkraft der Druckfeder 12 in der Figur 1 nach rechts, also auf die Druckfeder 12 zu.

An das Volumenstromregelventil 8 ist, wie durch einen Pfeil 14 angedeutet ist, eine weitere Hydraulikleitung angeschlossen. Die weitere Hydraulikleitung 14 verbindet das Volumenstromregelventil 8 mit einem Kupplungsstellglied 16. Bei dem Kupplungsstellglied 16 handelt es sich zum Beispiel um eine Kolben-/Zylindereinheit, durch welche eine (nicht dargestellte) Kupplung hydraulisch betätigt wird. Zwischen das Volumenstromregelventil 8 und das Kupplungsstellglied 16 ist eine Blende 20 geschaltet. Durch die Richtung der Pfeile 3 und 14 ist die Strömungsrichtung des Hydraulikmediums beim Befüllen des Kupplungsstellglieds 16 angedeutet. Durch eine gestrichelte Linie 23 ist eine Druckrückführleitung angedeutet, durch die der Druck, in Füllrichtung betrachtet, stromaufwärts der Blende 20, also zur Hydraulikmediumquelle 2 hin, auf das Ende 13 des Ventilkörpers 9 zurückgeführt ist. Durch eine weitere gestrichelte Linie 25 ist eine weitere Druckrückführleitung angedeutet, durch die der Druck stromabwärts der Blende 20 auf das Ende 11 des Ventilkörpers 9 zurückgeführt ist.

Das Ventil 8 ist durch die Druckfeder 12 in die dargestellte Stellung E vorgespannt. Wenn der Proportionalmagnet 10 bestromt wird, dann öffnet sich das Ventil 8, das heißt der Ventilkörper 9 wird die Stellung F bewegt. In der Stellung F wird ein Volumenstrom von der Hydraulikquelle 2 zu dem Kupplungsstellglied 16 freigegeben. Dabei baut sich an der Blende 20 eine Druckdifferenz auf, wobei der höhere Druck stromaufwärts der Blende 20 auf die Seite 13 des Ventilkörpers 9 zurückgeführt wird. Der niedrigere Druck stromabwärts der Blende 20 wird auf die Seite 11 des Ventilkörpers 9 zurückgeführt. Um einen bestimmten Volumenstrom von der Hydraulikquelle 2 in das Kupplungsstellglied 16 einzustellen, muss eine definierte Magnetkraft des Proportionalmagneten 10 eingestellt werden. Ein ansteigender Volumenstrom bewirkt eine höhere Druckdifferenz an der Blende 20. Die über die Druckrückführleitungen 23 und 25 auf den Ventilkörper 9 zurückgeführte Druckdifferenz sorgt dafür, dass der Ventilkolben 9 so weit auf die Druckfeder 12 zu bewegt wird, bis der gewünschte Volumenstrom wieder hergestellt ist.

Wenn das Kupplungsstellglied 16 entleert werden soll, dann kehren sich der Volumenstrom und somit auch die Druckdifferenz an der Blende 20 um. Beim Entleeren des Kupplungsstellglieds 16 in den Tank 2 sind jedoch auch die zugehörigen Steuerkanten des Ventils 8 umgekehrt gelegen. Somit wirkt die beim Entleeren rückwärts durchströmte Blende 20 auf die Magnetkraft des Proportionalmagneten 10 unterstützend. Also wirkt auch bei dieser Durchflussrichtung die Druckdifferenz an der Blende 20 auf die relevante Steuerkante des Ventils 8. Mit dem Volumenstromregelventil 8 kann demnach sowohl beim Befüllen als auch beim Entleeren des Kupplungsstellglieds 16 ein definierter Volumenstrom eingestellt werden.

In Figur 2 ist ein ähnlicher Hydraulikschaltplan wie in Figur 1 dargestellt. Zur Bezeichnung gleicher Teile werden die gleichen Bezugszeichen verwendet. Um Wiederholungen zu vermeiden, wird auf die vorangegangene Beschreibung der Figur 1 verwiesen. Im Folgenden wird hauptsächlich auf die Unterschiede zwischen den beiden Ausführungsbeispielen eingegangen.

In Figur 2 ist eine Kupplungssteuerungseinrichtung 41 dargestellt, bei der die Hydraulikleitung 3 zwischen der Hydraulikquelle 2 und dem Volumenstromregelventil 8 mit einer Zulaufblende 50 ausgestattet ist. Durch eine gestrichelte Linie 51 ist angedeutet, dass der Druck stromabwärts der Zulaufblende 50 auf die Seite 11 des Ventilkörpers 9 zurückgeführt ist. Durch eine weitere gestrichelte Linie 52 ist angedeutet, dass der Druck stromaufwärts der Blende 50 auf die Seite 13 des Ventilkörpers 9 zurückgeführt ist.

Darüber hinaus ist bei dem in Figur 2 dargestellten Ausführungsbeispiel die Hydraulikleitung 5 zwischen dem Volumenstromregelventil 8 und der Hydrauliksenke 4 mit einer Entleerungsblende 60 ausgestattet. Durch eine weitere gestrichelte Linie 61 ist eine weitere Druckrückführleitung angedeutet, durch die der Druck stromaufwärts der Entleerungsblende 60 auf die Seite 11 des Ventilkörpers 9 zurückgeführt ist.

Da bei dem in Figur 2 dargestellten Ausführungsbeispiel für die verschiedenen Durchströmungsrichtungen des Ventils 8 jeweils eine eigene Blende 50, 60 vorgesehen ist, können diese Blenden 50, 60 ideal an die jeweiligen Bedürfnisse angepasst werden. Beim Befüllen des Kupplungsstellglieds 16 verursacht der Volumenstrom in Richtung des Pfeils 3 an der Füllblende 50, die auch als Zulaufblende bezeichnet wird, eine Druckdifferenz, die auf beide Seiten 11, 13 des Ventilkörpers 9 zurückgeführt wird. Wenn das Kupplungsstellglied 16 entleert werden soll, dann steht an der Füllblende 50 beidseitig der Systemdruck der Hydraulikquelle 2 an. Die durch die Druckrückführungen 51, 52 auf den Ventilkörper 9 wirkenden Kräfte heben sich gegenseitig auf. Die Entleerungsblende 60 verursacht einen Rückstaudruck, der über die Druckrückführleitung 61 auf die Seite 11 des Ventilkörpers 9 zurückgeführt wird, und somit eine Volumenstromregelung ermöglicht.

### Bezugszeichenliste

- 1.: Kupplungssteuerungseinrichtung
- 2.: Hydraulikmediumquelle
- 3.: Pfeil
- 4.: Pfeil
- 8.: 3/3-Wege-Proportionalmagnetventil
- 9.: Ventilkörper
- 10.: Proportionalmangnet
- 11.: Ende
- 12.: Druckfeder
- 13.: Ende
- 14.: Pfeil
- 16.: Kupplungsstellglied
- 20.: Blende
- 23.: Druckrückführleitung
- 25.: Druckrückführleitung
- 41.: Kupplungssteuerungseinrichtung
- 50.: Zulaufblende
- 51.: Druckrückführleitung
- 52.: Druckrückführleitung
- 60.: Entleerungsblende
- 61.: Druckrückführleitung

## Patentansprüche

1. Kupplungssteuerungseinrichtung zum Steuern der Betätigung einer hydraulisch angesteuerten Kupplung mit einer Ventileinrichtung, wobei die Ventileinrichtung ein Volumenstromregelventil (8) umfasst, das sowohl ein volumenstromgeregeltes Befüllen als auch ein volumenstromgeregeltes Entleeren eines hydraulischen Kupplungsstellglieds (16) ermöglicht, wobei das Volumenstromregelventil (8) einen Ventilkörper (9) umfasst, der zwischen einer Füllstellung (F), in der ein Füllvolumenstrom von einer Hydraulikmediumquelle (2) zu dem Kupplungsstellglied (16) freigegeben ist, und einer Entleerungstellung (E) bewegbar ist, in der ein Entleerungsvolumenstrom von dem Kupplungsstellglied (16) zu einer Hydraulikmediumsenke (4) freigegeben ist, wobei der Ventilkörper (9) durch eine Federeinrichtung (12), die an einem Ende (13) des Ventilkörpers (9) angreift, in seine Entleerungsstellung (E) vorgespannt ist, und durch einen Proportional magneten (10), der an der anderen Seite (11) des Ventilkörpers (9) angreift, in seine Füllstellung (F) bewegbar ist,
**dadurch gekennzeichnet, dass**
zwischen das Volumenstromregelventil (8) und das hydraulische Kupplungsstellglied (16) eine Blende (20) geschaltet ist, wobei der Druck, in Füllrichtung des Kupplungsstellglieds (16) betrachtet, stromaufwärts der Blende (20) auf eine Seite, insbesondere auf die Seite (13) des Ventilkörpers (9) zurückgeführt ist, an der die Federeinrichtung (12) angreift, und dass der Druck, in Füllrichtung des Kupplungsstellglieds (16) betrachtet, stromabwärts der Blende (20) auf die andere Seite, insbesondere auf die Seite (11) des Ventilkörpers (9) zurückgeführt ist, an der der Proportionalmagnet (10) angreift.

2. Kupplungsteuerungseinrichtung nach Anspruch 1, **dadurch gekennzeichnet, dass** das Volumenstromregelventil (8) zwischen der Füllstellung (F) und der Entleerungsstellung (E) eine Schließstellung (S) für den Ventilkörper (9) aufweist, in der beide Volumenströme unterbrochen sind.

3. Kupplungssteuerungseinrichtung zum Steuern der Betätigung einer hydraulisch angesteuerten Kupplung mit einer Ventileinrichtung, wobei die Ventileinrichtung ein Volumenstromregelventil (8) umfasst, das sowohl ein volumenstromgeregeltes Befüllen als auch ein volumenstromgeregeltes Entleeren eines hydraulischen Kupplungsstellglieds (16) ermöglicht, wobei das Volumenstromregelventil (8) einen Ventilkörper (9) umfasst, der zwischen einer Füllstellung (F), in der ein Füllvolumenstrom von einer Hydraulikmediumquelle (2) zu dem Kupplungsstellglied (16) freigegeben ist, und einer Entleerungstellung (E) bewegbar ist, in der ein Entleerungsvolumenstrom von dem Kupplungsstellglied (16) zu einer Hydraulikmediumsenke (4) freigegeben ist, wobei der Ventilkörper (9) durch eine Federeinrichtung (12), die an einem Ende (13) des Ventilkörpers (9) angreift, in seine Entleerungsstellung (E) vorgespannt ist, und durch einen Proportionalmagneten (10), der an der anderen Seite (11) des Ventilkörpers (9) angreift, in seine Füllstellung (F) bewegbar ist,
**dadurch gekennzeichnet, dass**
zwischen die Hydraulikmediumquelle (2) und das Volumenstromregelventil (8) eine Füllblende (50) geschaltet ist, wobei der Druck, in Füllrichtung des Kupplungsstellglieds (16) betrachtet, stromaufwärts der Füllblende (50) auf eine Seite, insbesondere auf die Seite (13) des Ventilkörpers (9) zurückgeführt ist, an der die Federeinrichtung (12) angreift, und dass der Druck, in Füllrichtung des Kupplungsstellglieds (16) betrachtet, stromabwärts der Füllblende (50) auf die andere Seite, insbesondere auf die Seite (11) des Ventilkörpers (9) zurückgeführt ist, an der der Proportionalmagnet (10) angreift.

4. Kupplungssteuerungseinrichtung nach Anspruch 3, **dadurch gekennzeichnet, dass** zwischen das Volumenstromregelventil (8) und die Hydraulikmediumsenke (4) eine Entleerungsblende (60) geschaltet ist, wobei der Druck, in Entleerungsrichtung des Kupplungsstellglieds (16) betrachtet, stromaufwärts der Entleerungsblende (60) auf eine Seite, insbesondere auf die Seite (11) des Ventilkörpers (9) zurückgeführt ist, an der der Proportionalmagnet (10) angreift.

5. Kupplungssteuerungseinrichtung nach einem der vorhergehenden Ansprüche, **dadurch gekennzeichnet, dass** das Volumenstromregelventil (8) als federvorgespanntes 3/3-Wege-Proportionalmagnetventil ausgeführt ist.

6. Kupplung, insbesondere Nasskupplung, mit einer Kupplungssteuerungseinrichtung (1;41) nach einem der vorhergehenden Ansprüche.

7. Antriebsstrang mit einem Motor und einem Getriebe, insbesondere einem automatischen Schaltgetriebe, Doppelkupplungsgetriebe oder CVT-Getriebe, **dadurch gekennzeichnet, dass** eine Kupplung gemäß Anspruch 6 insbesondere als Anfahrkupplung zwischen den Motor und das Getriebe geschaltet ist.

## Claims

1. Clutch control device for controlling the actuation of a hydraulically activated clutch, having a valve device, with the valve device comprising a volume flow regulating valve (8) which allows both volume-flow-regulated filling and also volume-flow-regulated emptying of a hydraulic clutch actuating element (16), with the volume flow regulating valve (8) comprising a valve body (9) which can be moved between a filling position (F), in which a filling volume flow from a hydraulic medium source (2) to the clutch actuating element (16) is enabled, and an emptying position (E), in which an emptying volume flow from the clutch actuating element (16) to a hydraulic medium sink (4) is enabled, with the valve body (9) being preloaded into its emptying position (E) by means of a spring device (12) which acts on one end (13) of the valve body (9) and being movable into its filling position (F) by means of a proportional magnet (10) which acts on the other side (11) of the valve body (9),
**characterized in that**
an orifice (20) is connected between the volume flow regulating valve (8) and the hydraulic clutch actuating element (16), with the pressure upstream of the orifice (20) as viewed in the filling direction of the clutch actuating element (16) being recirculated to one side, in particular to that side (13) of the valve body (9) on which the spring device (12) acts, and **in that** the pressure downstream of the orifice (20) as viewed in the filling direction of the clutch actuating element (16) is recirculated to the other side, in particular to that side (11) of the valve body (9) on which the proportional magnet (10) acts.

2. Clutch control device according to Claim 1, **characterized in that** the volume flow regulating valve (8) has a closed position (S) for the valve body (9) between the filling position (F) and the emptying position (E), in which closed position (S) both volume flows are blocked.

3. Clutch control device for controlling the actuation of a hydraulically activated clutch, having a valve device, with the valve device comprising a volume flow regulating valve (8) which allows both volume-flow-regulated filling and also volume-flow-regulated emptying of a hydraulic clutch actuating element (16), with the volume flow regulating valve (8) comprising a valve body (9) which can be moved between a filling position (F), in which a filling volume flow from a hydraulic medium source (2) to the clutch actuating element (16) is enabled, and an emptying position (E), in which an emptying volume flow from the clutch actuating element (16) to a hydraulic medium sink (4) is enabled, with the valve body (9) being preloaded into its emptying position (E) by means of a spring device (12) which acts on one end (13) of the valve body (9) and being movable into its filling position (F) by means of a proportional magnet (10) which acts on the other side (11) of the valve body (9),
**characterized in that**
a filling orifice (50) is connected between the hydraulic medium source (2) and the volume flow regulating valve (8), with the pressure upstream of the filling orifice (50) as viewed in the filling direction of the clutch actuating element (16) being recirculated to one side, in particular to that side (13) of the valve body (9) on which the spring device (12) acts, and **in that** the pressure downstream of the filling orifice (50) as viewed in the filling direction of the clutch actuating element (16) is recirculated to the other side, in particular to that side (11) of the valve body (9) on which the proportional magnet (10) acts.

4. Clutch control device according to Claim 3, **characterized in that** an emptying orifice (60) is connected between the volume flow regulating valve (8) and the hydraulic medium sink (4), with the pressure upstream of the emptying orifice (60) as viewed in the emptying direction of the clutch actuating element (16) being recirculated to one side, in particular to that side (11) of the valve body (9) on which the proportional magnet (10) acts.

5. Clutch control device according to one of the preceding claims, **characterized in that** the volume flow regulating valve (8) is designed as a spring preloaded 3/3-way proportional solenoid valve.

6. Clutch, in particular wet clutch, having a clutch control device (1;41) according to one of the preceding claims.

7. Drivetrain having an engine and having a gearbox, in particular an automatic shift gearbox, dual-clutch gearbox or CVT gearbox, **characterized in that** a clutch according to Claim 6 is connected, in particular as a starting clutch, between the engine and the gearbox.

## Revendications

1. Dispositif de commande d'embrayage pour commander l'actionnement d'un embrayage à commande hydraulique avec un dispositif de vannes, dans lequel le dispositif de vannes comprend une vanne de régulation du courant volumique (8), qui permet aussi bien un remplissage avec régulation du courant volumique qu'une vidange avec régulation du courant volumique d'un organe de commande d'embrayage hydraulique (16), dans lequel la vanne de régulation du courant volumique (8) comprend un corps de vanne (9), qui est déplaçable entre une position de remplissage (F), dans laquelle un courant volumique de remplissage depuis une source de fluide hydraulique (2) vers l'organe de commande d'embrayage (16) est libéré, et une position de vidange (E), dans laquelle un courant volumique de vidange depuis l'organe de commande d'embrayage (16) vers un carter de fluide hydraulique (4) est libéré, dans lequel le corps de vanne (9) est précontraint dans sa position de vidange (E) par un dispositif de ressort (12), qui agit sur une extrémité (13) du corps de vanne (9), et est déplaçable dans sa position de remplissage (F) par un aimant proportionnel (10), qui agit sur l'autre côté (11) du corps de vanne (9), **caractérisé en ce qu'**un diaphragme (20) est monté entre la vanne de régulation du courant volumique (8) et l'organe de commande d'embrayage hydraulique (16), dans lequel la pression, considérée dans la direction de remplissage de l'organe de commande d'embrayage (16), en amont du diaphragme (20), est ramenée sur un côté, en particulier sur le côté (13) du corps de vanne (9) sur lequel agit le dispositif de ressort (12), et **en ce que** la pression, considérée dans la direction de remplissage de l'organe de commande d'embrayage (16), en aval du diaphragme (20), est ramenée sur l'autre côté, en particulier sur le côté (11) du corps de vanne (9) sur lequel agit l'aimant proportionnel (10).

2. Dispositif de commande d'embrayage selon la revendication 1, **caractérisé en ce que** la vanne de régulation du courant volumique (8) présente, entre la position de remplissage (F) et la position de vidange (E), une position de fermeture (S) pour le corps de vanne (9), dans laquelle les deux courants volumiques sont interrompus.

3. Dispositif de commande d'embrayage pour commander l'actionnement d'un embrayage à commande hydraulique avec un dispositif de vannes, dans lequel le dispositif de vannes comprend une vanne de régulation du courant volumique (8), qui permet aussi bien un remplissage avec régulation du courant volumique qu'une vidange avec régulation du courant volumique d'un organe de commande d'embrayage hydraulique (16), dans lequel la vanne de régulation du courant volumique (8) comprend un corps de vanne (9), qui est déplaçable entre une position de remplissage (F), dans laquelle un courant volumique de remplissage depuis une source de fluide hydraulique (2) vers l'organe de commande d'embrayage (16) est libéré, et une position de vidange (E), dans laquelle un courant volumique de vidange depuis l'organe de commande d'embrayage (16) vers un carter de fluide hydraulique (4) est libéré, dans lequel le corps de vanne (9) est précontraint dans sa position de vidange (E) par un dispositif de ressort (12), qui agit sur une extrémité (13) du corps de vanne (9), et est déplaçable dans sa position de remplissage (F) par un aimant proportionnel (10), qui agit sur l'autre côté (11) du corps de vanne (9), **caractérisé en ce qu'**un diaphragme de remplissage (50) est monté entre la source de fluide hydraulique (2) et la vanne de régulation du courant volumique (8), dans lequel la pression, considérée dans la direction de remplissage de l'organe de commande d'embrayage (16), en amont du diaphragme de remplissage (50), est ramenée sur un côté, en particulier sur le côté (13) du corps de vanne (9) sur lequel agit le dispositif de ressort (12), et **en ce que** la pression, considérée dans la direction de remplissage de l'organe de commande d'embrayage (16), en aval du diaphragme de remplissage (50), est ramenée sur l'autre côté, en particulier sur le côté (11) du corps de vanne (9) sur lequel agit l'aimant proportionnel (10).

4. Dispositif de commande d'embrayage selon la revendication 3, **caractérisé en ce qu'**un diaphragme de vidange (60) est monté entre la vanne de régulation du courant volumique (8) et le carter de fluide hydraulique (4), dans lequel la pression, considérée dans la direction de vidange de l'organe de commande d'embrayage (16), en amont du diaphragme de vidange (60), est ramenée sur un côté, en particulier sur le côté (11) du corps de vanne (9) sur lequel agit l'aimant proportionnel (10).

5. Dispositif de commande d'embrayage selon l'une quelconque des revendications précédentes, **caractérisé en ce que** la vanne de régulation du courant volumique (8) se présente sous la forme d'une vanne magnétique proportionnelle à 3/3 voies précontrainte par ressort.

6. Embrayage, en particulier embrayage hydraulique, avec un dispositif de commande d'embrayage (1; 41) selon l'une quelconque des revendications précédentes.

7. Ligne de transmission avec un moteur et une boîte de vitesses, en particulier une boîte de vitesses automatique, une boîte de vitesses à double embrayage ou une boîte de vitesses CVT, **caractérisée en ce qu'**un embrayage selon la revendication 6 est monté entre le moteur et la boîte de vitesses, en particulier comme embrayage de démarrage.
